# EUROPEAN PATENT SPECIFICATION

(11) **EP 0 829 204 B1**
(45) Date of publication and mention of the grant of the patent: **18.07.2001**
(21) Application number: 97202752.8
(22) Date of filing: 08.09.1997
(51) Int. Cl.: A22C 17/10

(54) **Method for marking a food product, and a marked food product obtained**
Verfahren zum Markieren von Nahrungsmitteln und so hergestelltes Produkt
Procédé de marquage d'un produit alimentaire et produit ainsi obtenu

(30) Priority: 11.09.1996 NL 1004006
(43) Date of publication of application: 18.03.1998
(73) Proprietor: Vereniging van Nederlandse Baconfabrikanten, 2280 GA RIJSWIJK (NL)
(72) Inventor: Logtenberg, Harry, 3721 JV Bilthoven (NL)
(74) Representative: Barendregt, Frank, Drs.

(56) References cited:
- EP-A- 0 326 485
- EP-A- 0 443 959
- DE-C- 466 007
- FR-A- 2 621 529
- NL-A- 7 001 241
- US-A- 1 995 725
- US-A- 2 040 149

## Description

The present invention relates in the first place to a method for marking a food product, in particular a meat product, which is or can be divided into portions along cutting faces, comprising the step of placing a number of marking lines on the food product substantially crosswise to the cutting faces, which marking lines can be distinguished in the individual portions of the food product.

Such a method is known from EP-A-O 443 959. In the method according to EP-A-O 443 959 one or more marking lines of a protein-based material like casein or of a collagen based material, are applied on a lipid and protein containing outer layer of a food product.

Said method has the disadvantage, that the marking lines only discriminate the food product from non-marked food products. The possibility of discriminating marked food products from one another is however not provided. The invention intends to improve the above mentioned marking method and is characterized in that the marking lines are applied in a bar code type of pattern.

The marked food product which can be produced by the method according to the invention has the very great advantage that even after the product has been divided into portions the marking lines can still be distinguished in the individual portions, the bar code type of pattern of the marking lines making it possible, that the food products comprising said marking lines can be discriminated from one another.

A number of data relating to the food product concerned, such as, inter alia, the origin (producer), possibly data concerning shelf life, quantity, composition etc., can be established by means of the marking.

For the sake of clarity, the remainder of the description will refer to a meat product, but it will be clear that the present invention is by no means limited thereto and relates to all types of food products where marking is desirable.

The marking lines according to the invention are not particularly limited. All kinds of marking lines are possible here, not only placing material on or in the food product, but also removing material from the food product, the latter option being, of course, less preferable because of the weight loss involved. The marking lines according to the invention preferably comprise incisions, dye lines, brand lines, larding lines, or a combination thereof.

It is most preferable to make incisions. Incisions namely have the advantage that they are virtually invisible for the consumer, no material is lost from the food product, and virtually no material is applied or the characteristics of the food product otherwise altered.

Incisions can be made in many ways. They can be made in the food product with knives, preferably rotary circular knives, water jet cutters, laser cutters or the like.

When dyes are used to place the marking lines on the food product, dyes commonly used in the food industry can be used. However, in this connection it is preferable to use invisible dyes, such as dyes which fluoresce under ultraviolet irradiation or infrared irradiation. Other forms of dye lines are marking lines formed by placing a food material on the food product. An example of this is to place marking lines on meat products by means of a meat paste in a distinguishable colour. In the case of extruded meat products the marking lines can be co-extruded with the product.

For the application of marking lines, attention is also drawn to the techniques connected with larding, in the case of which, for example, strands of bacon fat or the like are introduced into meat and can serve as marking lines. In other words, the invention is not limited to marking lines near the outside of the food product.

There are many different ways in which the marking lines can contain the information, which are widely known in the field of the bar code techniques.

Finally, the invention provides a food product, in particular a meat product, which is or can be divided into portions along cutting faces and which is provided with a number of marking lines in a bar code type of pattern, placed substantially crosswise to the cutting faces, which food product can be obtained by the method according to the invention.

In particular, the food product comprises bacon, and the marking lines comprise a number of incisions.

In this respect, EP-A-0 326 485 is mentioned, wherein a method is described providing a uniform marking line in a food product by placing an incision therein and successively applying for example a gold thread in the said decision. This marking method does not enable the marked food products to be discriminated from one another. In practice it turned out that, when the food product is cut in very thin slices, the gold thread is not adequately hold in the said slices. Identification of the individual slices is therefore not well possible. Slices, originating from a food product, marked according to the method of the present invention can however very well be identified.

In US-A-1,995,725 a method is described for placing a specially formed internal incision over the entire length of, for example a piece of meat, crosswise to the cutting face thereof. Placing of an internal mark is however complicated and may lead to a diminished bond within the individual slices, giving said slices an unattractive appearance. It is also possible that, using this method, the marking can be damaged, so that identification of the slices becomes impossible.

Further attention is drawn to DE-C-466 007, describing a device for placing incisions in the rind of ham, in which the distance of the incisions can be varied according to the intended marking. This device is particularly intended to place incisions locally, whereby several right-angled rind pieces can be removed for identification of the ham, in order to obtain a desired pattern, for example in the form of a character. The said device is not intended to apply marking lines in a bar code type pattern crosswise to the cutting faces of the food product.

The invention will be explained in greater detail below with reference to the appended drawing, in which:
Fig. 1 shows a joint of unsliced bacon with four incisions as marking lines, forming a bar code type of pattern.
Fig. 2 shows a slice of bacon in side view; and
Fig. 3 shows an example of a bar code type of marking.

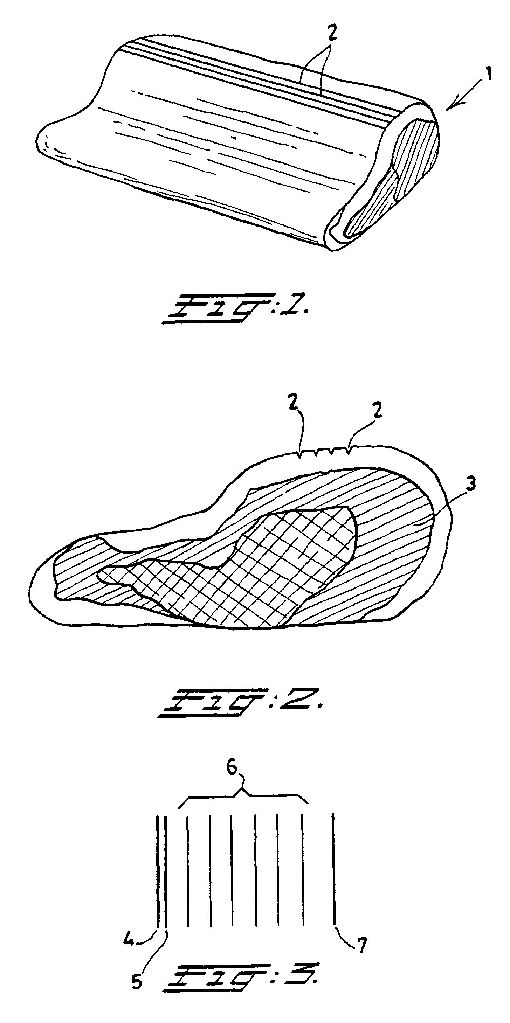

Fig. 1 shows in perspective view a joint of bacon 1, in which four marking lines in the form of incisions 2 are made diagrammatically. In the present example the marking lines 2 are substantially linear, which is however not essential.

The above can be seen more clearly in Fig. 2, in which a slice 3 of the joint of bacon 1 is shown in side view. The incisions 2 are clearly visible here. The depth of the incisions will depend on the food product concerned. In the case of bacon, in which an outside layer of fat with a rind is present, the incision depth is advantageously no more than approximately 5 mm, and preferably approximately 2 mm.

For possible additional data, dyes can be applied to the incisions 2.

A large number of products can be distinguished from one another by means of only a small number of lines. Lines can represent numbers or other information by means of which the food products can be identified.

Fig. 3 shows an example of a bar code type of marking, which consists of two cuts for marking the area in which the code lies, i.e. the cuts 5 and 7, and in which the code is indicated by a pattern of incisions 6. An incision 4 is also present for position-fixing, in other words, a so-called rotation identification.

In this way it is unambiguously established that the code must be read from the lines 4, 5 onwards. By means of the six code lines 6, a very large number of products can be distinguished from one another. For the sake of clarity, it is pointed out that the coding is carried out by optionally making an incision 6 at certain positions between the lines 5 and 7. Dyes may also be used in the incisions, if desired.

With the use of suitable cutting equipment, it is also possible to make incisions of different depths and widths. This provides the possibility of applying a common bar code to the food product. Such a bar code can, of course, also be applied with dye or food material, or by larding with strands of various thicknesses.

## Claims

1. Method for marking a food product (1), in particular a meat product, which is or can be divided into portions along cutting faces, comprising the step of placing a number of marking lines (2) on the food product (1) substantially crosswise to the cutting faces, which marking lines (2) can be distinguished in the individual portions (3) of the food product (1), characterized in that the marking lines (2) are applied in a bar code type of pattern (4, 5, 6, 7).

2. Method according to claim 1, characterized in that incisions, dye lines, brand lines, larding lines, or a combination thereof, are applied as marking lines (2).

3. Food product (1), in particular a meat product, which is or can be divided into portions (3) along cutting faces, and is provided with a number of marking lines (2) in a bar code type of pattern (4, 5, 6, 7), placed substantially crosswise to the cutting faces, which food product (1) can be obtained by the method according to claim 1 or 2.

4. Food product according to claim 3, characterized in that the food product (1) comprises bacon, and the marking lines (2) comprise a number of incisions.

## Patentansprüche

1. Verfahren zur Markierung eines Lebensmittels (1), insbesondere eines Fleischprodukts, das entlang von Schnittflächen in Teile geteilt ist oder werden kann, das den Schritt der Platzierung einer Anzahl von Markierungsstreifen (2) im wesentlichen kreuzweise zu den Schnittflächen auf dem Lebensmittel enthält, wobei die Markierungsstreifen (2) in den einzelnen Teilen (3) des Lebensmittels (1) unterschieden werden können, dadurch gekennzeichnet, dass die Markierungsstreifen (2) in einem Muster vom Typ eines Barcodes (4, 5, 6, 7) angebracht werden.

2. Verfahren nach Anspruch 1, dadurch gekennzeichnet, dass Einschnitte, Farbstreifen, Brandstreifen, Fettstreifen oder eine Kombination daraus als Markierungsstreifen (2) angebracht werden.

3. Lebensmittel (1), insbesondere ein Fleischprodukt, das entlang von Schnittflächen in Teile (3) geteilt ist oder werden kann, und das mit einer Anzahl von Markierungsstreifen (2) in einem Muster (4, 5, 6, 7) vom Typ eines Barcodes, das im wesentlichen kreuzweise zu den Schnittflächen angeordnet ist, versehen ist, wobei das Lebensmittel (1) mittels des Verfahrens nach Anspruch 1 oder 2 erhalten werden kann.

4. Lebensmittel nach Anspruch 3, dadurch gekennzeichnet, dass das Lebensmittel (1) Bacon enthält, und dass die Markierungsstreifen (2) eine Anzahl von Einschnitten enthalten.

## Revendications

1. Méthode pour marquer un produit alimentaire (1), en particulier un produit de boucherie, qui est divisé ou qui peut être divisé en parts le long de faces de coupe, consistant à apposer un certain nombre de lignes de marquage (2) sur le produit alimentaire (1) sensiblement transversalement par rapport aux faces de coupe, lesquelles lignes de marquage (2) peuvent être distinguées dans les parts individuelles (3) du produit alimentaire (1), caractérisée en ce qu'on applique les lignes de marquage (2) sous la forme d'un motif du type code-barres (4, 5, 6, 7).

2. Méthode selon la revendication 1, caractérisée en ce qu'on applique comme lignes de marquage (2) des incisions, des lignes de colorant, des lignes appliquées au fer, des lignes de saindoux ou une combinaison de ces marques.

3. Produit alimentaire (1), en particulier produit de boucherie, qui est divisé ou qui peut être divisé en parts (3) le long de faces de coupe et qui porte un certain nombre de lignes de marquage (2) sous la forme d'un dessin du type code-barres (4, 5, 6, 7) qui sont apposées sensiblement transversalement par rapport aux faces de coupe, ledit produit alimentaire (1) pouvant être obtenu grâce à la méthode selon la revendication 1 ou 2.

4. Produit alimentaire selon la revendication 3, caractérisé en ce que le produit alimentaire (1) comprend du bacon et les lignes de marquage (2) comprennent un certain nombre d'incisions.
